(19) Europäisches Patentamt
European Patent Office
Office européen des brevets

(11) Veröffentlichungsnummer: **0 291 941 B1**

(12) **EUROPÄISCHE PATENTSCHRIFT**

(45) Veröffentlichungstag der Patentschrift: **09.12.92**

(51) Int. Cl.[5]: **C08G 77/06**

(21) Anmeldenummer: **88107914.9**

(22) Anmeldetag: **18.05.88**

(54) **Verfahren zur Herstellung kolloidaler Suspensionen von Organopolysiloxanen.**

(30) Priorität: **21.05.87 DE 3717075**

(43) Veröffentlichungstag der Anmeldung:
**23.11.88 Patentblatt 88/47**

(45) Bekanntmachung des Hinweises auf die Patenterteilung:
**09.12.92 Patentblatt 92/50**

(84) Benannte Vertragsstaaten:
**AT BE CH DE ES FR GB IT LI NL SE**

(56) Entgegenhaltungen:
**EP-A- 0 242 798** **DE-A- 3 022 308**
**GB-A- 2 018 271** **US-A- 4 424 297**
**US-A- 4 496 687** **US-A- 4 529 758**

(73) Patentinhaber: **WACKER-CHEMIE GMBH**
**Hanns-Seidel-Platz 4**
**W-8000 München 83(DE)**

(72) Erfinder: **Wolfgruber, Matthias, Dr. Dipl.-Chem.**
**Moosbrunnerstrasse 13**
**W-8263 Burghausen(DE)**
Erfinder: **Deubzer, Bernward, Dr. Dipl.-Chem.**
**Virchowstrasse 14**
**W-8263 Burghausen(DE)**
Erfinder: **Frey, Volker, Dr. Dipl.-Chem.**
**Jahnweg 5**
**W-8263 Burghausen(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Herstellung kolloidaler Suspensionen von Organosilsesquioxanen, mit einer durchschnittlichen Teilchengröße von 10 bis 100 nm ist aus US 3 433 780 (ausgegeben 18. März 1969, J. Cekada ,Jr. und D.R. Weyenberg, Dow Corning Corporation) und US 4 424 297 (ausgegeben 3. Januar 1984, A.E. Bey, Dow Corning Corporation) bekannt. Diese Suspensionen werden gewonnen, in dem Trialkoxysilane unter Bewegung einem Gemisch aus Wasser und oberflächenaktiven Mitteln zugegeben werden, wobei die Menge der zugefügten Trialkoxysilane weniger als etwa 10 Gew.-%, bezogen auf das Gesamtgewicht von Trialkoxysilan, Wasser und oberflächenaktiven Mitteln, beträgt oder wobei die Zugabegeschwindigkeit weniger als 10 Mol Trialkoxysilan pro Liter je Stunde beträgt.

Es bestand die Aufgabe, ein Verfahren bereitzustellen, das die kontinuierliche und reproduzierbare Herstellung lagerbeständiger, kolloidaler Suspensionen von Organopolysiloxanen mit einer durchschnittlichen Teilchengröße von 10 bis 150 nm erlaubt, mit dem Organopolysiloxane erhalten werden, die aus mindestens zwei verschiedenen Siloxaneinheiten wie Monoorganosiloxan-, Diorganosiloxan- und Triorganosiloxaneinheiten sowie $SiO_{4/2}$-Einheiten aufgebaut sind, und mit dem kolloidale Suspensionen von Organopolysiloxanen gewonnen werden, die einen Feststoffgehalt an Organopolysiloxan von bis zu 20 Gew.-%, bezogen auf das Gesamtgewicht der Suspension, aufweisen. Diese Aufgabe wird durch die Erfindung gelöst.

Gegenstand der Erfindung ist ein Verfahren zur Herstellung kolloidaler Suspensionen von Organopolysiloxanen durch Vermischen von Organosiliciumverbindung aus der Gruppe der Gemische von Alkoxysilanen der Formel

$R_aSi(OR^1)_{4-a}$ ,

wobei a 0, 1, 2 oder 3 ist, mit der Maßgabe, daß die Gemische mindestens zwei verschiedene Silane mit voneinander verschiedenem Wert von a enthalten und a durchschnittlich 1,0 bis 2,0 ist, und worin R gleich oder verschieden sein kann, ein Wasserstoffatom oder einen einwertigen Kohlenwasserstoffrest mit 1 bis 8 Kohlenstoffatom(en) je Rest, der gegenüber Wasser inerte Substituenten aufweisen kann, bedeutet und $R^1$ gleich oder verschieden sein kann, einen Alkyl- oder Alkoxyalkylenrest mit 1 bis 4 Kohlenstoffatom(en) je Rest oder einem Rest der Formel $-COCH_3$, $-COC_2H_5$ oder $-CH_2CH_2OH$ bedeutet,
und/oder deren Teilhydrolysaten
und gegebenenfalls von Alkoxygruppen freiem Organo(poly)siloxan mit höchstens 8 Siloxaneinheiten im Gemisch mit mindestens einem Alkoxysilan und/oder dessen Teilhydrolysat
mit Wasser in Gegenwart von Emulgator mit einer Geschwindigkeit von höchstens 5 Mol Organosiliciumverbindung je Stunde und Liter Wasser, dadurch gekennzeichnet, daß kontinuierlich voneinander getrennt Organosiliciumverbindung und Wasser einem Reaktor zugeführt werden, wobei mindestens einer der beiden Stoffe Emulgator enthalt, und daß aus der aus dem Reaktor kontinuierlich austretenden wäßrigen Suspension kontinuierlich Alkanol abdestilliert wird.

Bei dem bei dem erfindungsgemäßen Verfahren eingesetzten Reaktor kann es sich um einen Rohrreaktor, einen Rührkessel, eine Kesselkaskade, einen Kreislaufreaktor, einen Hordenreaktor oder andere gebräuchliche Reaktoren handeln. Der Reaktor ist gegebenenfalls jeweils mit einer Vorrichtung zum Wärmen oder Kühlen versehen.

Bevorzugt wird ein Rohrreaktor bei dem erfindungsgemäßen Verfahren eingesetzt, bei dem das Wasser am Anfang des Rohrreaktors und die Organosiliciumverbindung über mehrere Einspeisungsstellen, die entlang der Längsachse des Rohrreaktors angeordnet sind, kontinuierlich zugegeben werden und wobei mindestens einer der beiden Stoffe Emulgator enthält. Es sind mindestens zwei Einspeisungsstellen, vorzugsweise 5 bis 10 Einspeisungsstellen, für die Organosiliciumverbindung entlang der Längsachse des Rohrreaktors angeordnet. Die Einspeisungsstellen können über die ganze Länge des Rohrreaktors verteilt sein, vorzugsweise sind sie über das erste Viertel bis über die erste Hälfte der Länge des Rohrreaktors verteilt. Der Rohrreaktor ist vorzugsweise mit einer Vorrichtung zum Wärmen oder Kühlen des Reaktorinhalts ausgestattet.

Die Organosiliciumverbindung wird bei dem erfindungsgemäßen Verfahren mit einer Geschwindigkeit von höchstens 5 Mol je Stunde und Liter Wasser, vorzugsweise von 0,5 bis 1 Mol je Stunde und Liter Wasser zugegeben.

Nach einer Verweilzeit im Reaktor, die ausreicht die eingesetzte Organosiliciumverbindung zu hydrolysieren und kondensieren, tritt die wäßrige Suspension aus dem Reaktor kontinuierlich aus. Die Verweilzeit beträgt vorzugsweise mindestens 5 Minuten, insbesondere 30 bis 60 Minuten.

Aus der aus dem Reaktor austretenden wäßrigen Suspension wird das sich bei der Hydrolyse gebildete

Alkanol, kontinuierlich abdestilliert. Vorzugsweise wird das Alkanol über eine Kurzwegdestillation entfernt. Geeignet hierfür sind beispielsweise Dünnschichtverdampfer. Vorzugsweise wird dabei das gleiche Volumen je Zeiteinheit abdestilliert, das durch die Organosiliciumverbindung zugeführt wird, wobei der Volumenstrom des Wassers konstant ist.

Zur Erhöhung des Feststoffgehaltes an Organopolysiloxan wird die wäßrige Suspension wieder in den Reaktor kontinuierlich rückgeführt, wo ihr erneut kontinuierlich Organosiliciumverbindung und gegebenenfalls Emulgator zugeführt wird. Die wäßrige Suspension kann gegebenenfalls mehrmals im Kreis geführt werden, bis der gewünschte Feststoffgehalt an Organopolysiloxan erreicht wird. Ein Teil der anfallenden wäßrigen Suspension mit dem gewünschten Feststoffgehalt wird dann kontinuierlich abgenommen, der Rest wird in den Reaktor kontinuierlich rückgeführt und erneut kontinuierlich mit Wasser, Organosiliciumverbindung und Emulgator versetzt.

Es können wäßrige Suspensionen mit einem Feststoffgehalt an Organopolysiloxan von bis zu 20 Gew.-%, jeweils bezogen auf das Gesamtgewicht der Suspension, gewonnen werden, wobei der maximal mögliche Feststoffgehalt in der wäßrigen Suspension abhängig ist von den SiC-gebundenen organischen Resten in den Organopolysiloxanen.

Bei dem erfindungsgemäßen Verfahren wird eine reproduzierbare Zusammensetzung der Organopolysiloxane gewährleistet, da durch die Destillation außerhalb des Reaktors auch flüchtige oder langsam hydrolysierbare Organosiliciumverbindungen wie Dimethyldimethoxysilan oder Hexamethyldisiloxan bei ausreichender Verweilzeit im Reaktor zu Organopolysiloxanen umgesetzt werden und damit nicht zusammen mit dem Alkanol abdestilliert werden.

Das erfindungsgemäße verfahren wird vorzugsweise bei 15° bis 90°C, insbesondere bei 60 bis 85°C durchgeführt. Vorzugsweise wird es beim Druck der umgebenden Atmosphäre, also bei 1020 hPa (abs.) oder etwa 1020 hPa (abs.) durchgeführt. Es kann aber auch bei höheren oder niedrigeren Drücken durchgeführt werden.

Bei dem erfindungsgemäßen Verfahren werden als Organosiliciumverbindung aus der Gruppe der Gemische von Alkoxysilanen bevorzugt Gemische von Silanen der Formel $RSi(OR^1)_3$ und $R_2Si(OR^1)_2$ eingesetzt, worin R und $R^1$ die oben dafür angegebene Bedeutung haben und wobei $RSi(OR^1)_3$ und $R_2Si(OR^1)_2$ vorzugsweise im Molverhältnis von 0,1 bis 3,0, besonders bevorzugt im Molverhältnis von 0,4 bis 2,3 eingesetzt werden.

Bei dem erfindungsgemäßen Verfahren können als Organosiliciumverbindung auch Teilhydrolysate der im Anspruch 1 genannten Silangemische mit höchstens 10 Siliciumatomen je Teilhydrolysat eingesetzt werden.

Bei dem erfindungsgemäßen Verfahren können als Organosiliciumverbindung gegebenenfalls von Alkoxygruppen freie Organo(poly)siloxane mit höchstens 8 Siloxaneinheiten je Molekül im Gemisch mit mindestens einem Alkoxysilan und/oder dessen Teilhydrolysat eingesetzt werden. Als Organo(poly)siloxan mit höchstens 8 Siloxaneinheiten je Molekül können lineare Organo(poly)siloxane der Formel

$$R_3SiO(SiR_2O)_nSiR_3$$

verwendet werden, wobei n 0 oder eine ganze Zahl im Wert von 1 bis 6 ist und worin R die oben dafür angegebene Bedeutung hat. Vorzugsweise ist n 0 und besonders bevorzugt ist Hexamethyldisiloxan. Als Organo(poly)siloxane mit höchstens 8 Siloxaneinheiten je Molekül können auch cyclische Organo(poly)siloxane der Formel

$$(R_2SiO)_m$$

verwendet werden, wobei m eine ganze Zahl im Wert von 3 bis 8, vorzugsweise 4, ist und R die oben dafür angegebene Bedeutung hat.

Als Organo(poly)siloxan im Gemisch mit mindestens einem Alkoxysilan wird vorzugsweise Hexaorganodisiloxan im Gemisch mit Tetraalkoxysilan im Molverhältnis von 0,25 bis 1,0 eingesetzt. Insbesondere wird Hexamethyldisiloxan im Gemisch mit Tetraethylsilikat im Molverhältnis von 0,25 bis 1,0 eingesetzt. Des weiteren wird als Organo(poly)siloxan im Gemisch mit mindestens einem Alkoxysilan vorzugsweise cyclisches Organosiloxan im Gemisch mit Trialkoxysilan, insbesondere tetrameres cyclisches Organosiloxan im Gemisch mit Trialkoxysilan, eingesetzt.

Beispiele für Kohlenwasserstoffreste als SiC-gebundene organische Reste und damit ebenfalls als Reste R in den oben angegebenen Formeln sind Alkylreste, wie der Methyl-, Ethyl-, n-Propyl-, Isopropyl-, n-Butyl-, sec.-Butyl-, Amyl-, Hexyl-, ß-Ethylhexyl- und Heptylrest; Alkenylreste, wie der Vinyl-und Allylrest und Butenylreste; Alkinylreste; Cycloalkylreste, wie der Cyclobutyl- und Cyclohexylrest und Methylcyclohexylreste; Arylreste, wie der Phenylrest; Alkarylreste, wie Tolylreste; und Aralkylreste, wie der Benzylrest. Besonders bevorzugt sind der Methyl-, Vinyl- und Phenylrest.
Beispiele für substituierte Kohlenwasserstoffreste als SiC-gebundene organische Reste und damit ebenfalls als Reste R in den oben angegebenen Formeln sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl und 3-Cyanopropylrest; Aminoalkylreste, wie der 3-Aminopropyl-, N-(2-Aminoethyl)-3-aminopropyl- und N-(2Aminoethyl)-3-amino(2-methyl)propylrest; Aminoarylreste, wie der Aminophenylrest; Acryloxyalkylreste, wie der 3-Acryloxypropyl- und 3-Methacryloxypropylrest; Hydroxyalkylreste, wie der Hydroxypropylrest; und Reste der Formel

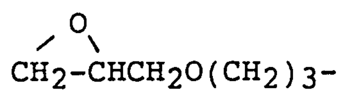 und

$$HOCH_2CH(OH)CH_2SCH_2CH_2-.$$

Beispiele für Kohlenwasserstoffreste $R^1$ sind Alkylreste, wie der Methyl-, Ethyl-, n-Propyl-, Isopropyl-, n-Butyl-, sec.-Butyl- und tert.-Butylrest; und Alkoxyalkylenreste, wie der Methoxyethylen- und Ethoxyethylenrest.Besonders bevorzugt sind der Methyl- und Ethylrest.

Die zur Herstellung der kolloidalen Suspensionen benötigten Emulgatoren umfassen Carbonsäuren mit 9 bis 20 C-Atomen, aliphatisch substituierte Benzolsulfonsäuren mit mindestens 6 C-Atomen in den aliphatischen Substituenten, aliphatisch-substituierte Naphthalinsulfonsäuren mit mindestens 4 C-Atomen in den aliphatischen Substituenten, aliphatische Sulfonsäuren mit mindestens 6 C-Atomen in den aliphatischen Substituenten, Silylalkylsulfonsäuren mit mindestens 6 C-Atomen in den Alkylsubstituenten, aliphatisch-substituierte Diphenylethersulfonsäuren mit mindestens 6 C-Atomen in den aliphatischen Substituenten, Alkylhydrogensulfate mit mindestens 6 C-Atomen in den Alkylsubstituenten, quaternäre Ammoniumhalogenide und quaternäre Ammoniumhydroxide. Alle genannten Säuren können als solche oder gegebenenfalls im Gemisch mit ihren Salzen verwendet werden.

Wenn anionische Emulgatoren eingesetzt werden, ist es vorteilhaft, solche zu verwenden, deren aliphatische Substituenten mindestens 8 und insbesondere 12 C-Atome enthalten. Spezielle Beispiele für aliphatische Substituenten sind Octyl-, Decyl-, Dodecyl-, Cetyl-, Stearyl-, Myricyl-, Oleyl-, Nonenyl-, Octinyl-, Phythyl- und Pentadecadienylreste. Als anionische Emulgatoren sind aliphatisch substituierte Benzolsulfonsäuren bevorzugt.

Wenn kationische Emulgatoren benutzt werden, ist es vorteilhaft, Halogenide und insbesondere Chloride und Bromide zu verwenden.

Die Menge des eingesetzten Emulgators kann, gemessen an der außerordentlich geringen Teilchengröße der kolloidalen Suspensionen von Organopolysiloxanen von durchschnittlich 10 bis 150 nm, sehr gering sein. Der Emulgator wird vorzugsweise in Mengen von 0,5 bis 2,9 Gewichtsprozent, besonders bevorzugt in Mengen von 1,5 bis 2,0 Gew.-%, jeweils bezogen auf das Gewicht der eingesetzten Organosiliciumverbindung, verwendet.

Der Emulgator kann sowohl zusammen mit dem Wasser als auch zusammen mit der erfindungsgemäß einzusetzenden Organosiliciumverbindungen zugegeben werden.

Bei vielen Anwendungen können aber auswaschbare oder zur Diffusion fähige, an Grenzflächen sich anreichernde Emulgatoren störend wirken. Es können daher bei dem erfindungsgemäßen Verfahren anstelle der oben genannten Emulgatoren vorteilhafter Additionssalze von Essigsäure an 3-Aminopropyltrimethoxysilan oder 3-Aminopropyltriethoxysilan, besonders vorteilhaft Additionssalze von Essigsäure an N-(2-Aminoethyl)-3-aminopropyltrimethoxysilan oder N-(2-Aminoethyl)-3-aminopropyltriethoxysilan verwendet werden, die zusammen mit den erfindungsgemäß einzusetzenden Organosiliciumverbindungen hydrolysiert und kondensiert werden und dabei in das Organopolysiloxangerüst mit eingebaut werden.

3-Aminopropyltrimethoxysilan bzw. 3-Aminopropyltriethoxysilan sowie N-(2-Aminoethyl)-3-aminopropyltrimethoxysilan bzw. N-(2-Aminoethyl)-3-aminopropyltriethoxysilan wird dabei vorzugsweise in Mengen von 5 bis 20 Gew.-% und Essigsäure vorzugsweise in Mengen von 4 bis 15 Gew.-%, jeweils bezogen auf das Gewicht der einzusetzenden Organosiliciumverbindungen, eingesetzt.

Des weiteren können auch Additionssalze von Natriumsulfit an 3-Glycidoxypropyltrimethoxysilan oder 3-Glycidoxypropyltriethoxysilan verwendet werden.

Neben der Art und Konzentration der Emulgatoren lassen sich durch geeignete Wahl von Reaktionsparameter, wie Temperatur und insbesondere des pH-Werts die Konstitution und Eigenschaften der gebildeten Organopolysiloxane, wie Hydrolyse-und Kondensationsgrad, Molekulargewicht, Löslichkeitsverhalten oder Schmelzpunkt entscheidend beeinflussen. Die Herstellung der kolloidalen Suspension von Organopolysiloxanen kann sowohl im sauren wie im neutralen oder alkalischen Milieu erfolgen. Allgemein läßt sich dabei feststellen, daß im sauren die Kondensation, im alkalischen die Hydrolyse den geschwindigkeitsbestimmenden Schritt bildet.

Nach dem erfindungsgemäßen Verfahren werden kolloidale Suspensionen von Organopolysiloxanen aus Einheiten der Formel

$$R_xSi(OR^2)_yO_{\frac{4-x-y}{2}}$$

hergestellt, wobei x 0, 1, 2 oder 3 ist, mit der Maßgabe, daß die Organopolysiloxane mindestens zwei verschiedene Einheiten mit voneinander verschiedenem Wert von x enthalten und x durchschnittlich 1,0 bis 2,0 ist, und wobei y 0, 1 oder 2, durchschnittlich 0,0 bis 0,5 ist, R die oben dafür angegebene Bedeutung hat und $R^2$ gleich oder verschieden sein kann, ein Wasserstoffatom oder einen Alkyl- oder Alkoxyalkylenrest mit 1 bis 4 Kohlenstoffatom(en) je Rest bedeutet.
Als Beispiele für Kohlenwasserstoffreste $R^2$ gelten im vollen Umfang alle oben genannten Beispiele für Kohlenwasserstoffreste $R^1$.

Besonders bevorzugt werden nach dem erfindungsgemäßen Verfahren kolloidale Suspensionen von Organopolysiloxanen, die $RSiO_{3/2}$-Einheiten und $R_2SiO_{2/2}$-Einheiten enthalten, hergestellt, wobei R die oben dafür angegebene Bedeutung hat und wobei das Verhältnis von $RSiO_{3/2}$-Einheiten zu $R_2SiO_{2/2}$-Einheiten vorzugsweise von 0,1 bis 3,0, besonders bevorzugt von 0,4 bis 2,3 variiert.

Ebenfalls besonders bevorzugt werden nach dem erfindungsgemäßen Verfahren kolloidale Suspensionen von Organopolysiloxanen, die $SiO_{4/2}$-Einheiten und $R_3SiO_{1/2}$-Einheiten enthalten, hergestellt, wobei R die oben dafür angegebene Bedeutung hat und wobei das Verhältnis von $SiO_{4/2}$-Einheiten zu $R_3SiO_{1/2}$-Einheiten vorzugsweise von 0,5 bis 2,0 variiert.

Vorzugsweise werden bei Raumtemperatur feste Organopolysiloxane erhalten.

Die kolloidalen Suspensionen der Organopolysiloxane haben einen durchschnittlichen Teilchendurchmesser von 10 bis 150 nm. Weiterhin sind sie lagerbeständig, wobei der Ausdruck "lagerbeständig" bedeutet, daß die Suspensionen mindestens 12 Monate lagerfähig sind, ohne daß erkennbar Abscheidungen auftreten.

Die erfindungsgemäß hergestellten kolloidalen Suspensionen sind für viele Anwendungen direkt einsetzbar, jedoch können die in ihnen enthaltenen Organopolysiloxane, falls gewünscht, auch auf jede denkbare Art aus der kolloidalen Suspension isoliert werden, z.B. durch Salzzugabe, Fällung durch polare Lösungsmittel oder Verdampfen des Wassers.

Die erfindungsgemäß hergestellten kolloidalen Suspensionen von Organopolysiloxanen sind für Imprägnier- und Beschichtungszwecke einsetzbar, beispielsweise im Bautenschutz zur Putzhydrophobierung oder bei der Papier- und Textilbehandlung. Erfindungsgemäß sind durch die Herstellung von Organopolysiloxanen, die aus Monoorganosiloxan- und Diorganosiloxaneinheiten oder aus $SiO_{4/2}$-Einheiten und Triorganosiloxaneinheiten bestehen, filmbildende kolloidale Suspensionen von Organopolysiloxanen zugänglich, welche nach Entfernen des Wassers bei Raumtemperatur und unter dem Druck der umgebenden Atmosphäre von 1020 hPa (abs.) oder unter reduziertem Druck oder bei erhöhter Temperatur nicht redispergierbare, transparente Harzfilme hinterlassen.

Beispiel 1

In einem Rohrreaktor mit einem bei 65 °C gehaltenen Inhalt von 4 l und Innendurchmesser von 3 cm werden 4 l je Stunde eines Wasser-Emulgator-Gemisches, das 24 g Dodecylbenzolsulfonsäure auf 4 l Wasser enthält, mit Hilfe einer Schlauchpumpe kontinuierlich eingespeist. Über fünf verschiedene Einspeisungsstellen, die entlang der Längsachse des Rohrreaktors im ersten Drittel des Rohrreaktors angeordnet sind, werden jeweils 400 ml je Stunde der Organosiliciumverbindung aus Tabelle 1 mit Hilfe von Dosierpumpen kontinuierlich zu dem Wasser-Emulgator-Gemisch zugegeben. Das aus dem Rohrreaktor austretende Reaktionsgemisch wird kontinuierlich auf einen Dünnschichtverdampfer aufgegeben. Im Dünnschichtverdampfer werden kontinuierlich 400 ml je Stunde eines Methanol-Wasser-Gemisches abdestilliert.

Die Temperatur und Umlaufgeschwindigkeit des Dünnschichtverdampfers werden so gewählt, daß jeweils das gleiche Volumen je Stunde abdestilliert wird, wie durch die Organosiliciumverbindung jeweils zugeführt wird. Im Destillat des Methanol-Wasser-Gemisches befinden sich bei der Herstellung der Suspensionen (A) bis (C) höchstens 5 Gew.-% der eingesetzten Menge des Dimethyldimethoxysilans. Die wäßrige Suspension wird nach der Destillation kontinuierlich in den Rohrreaktor rückgeführt und darin erneut jeweils mit der Organosiliciumverbindung aus Tabelle 1 beladen. Nach vier Durchgängen werden kontinuierlich 1 l je Stunde der kolloidalen wäßrigen Suspension abgenommen, 3 l je Stunde der kolloidalen wäßrigen Suspension in den Rohrreaktor rückgeführt und 1 l je Stunde frisches Wasser-Emulgator-Gemisch eingespeist. Die Organosiliciumverbindung aus Tabelle 1 wird über die fünf Einspeisungsstellen, wie oben beschrieben, jeweils mit einem konstanten Volumenstrom von 400 ml je Stunde zudosiert.

Es werden schwach opaleszierende, wäßrige Suspensionen von Organopolysiloxanen (A) bis (D) mit elektronenmikroskopisch ermittelten Teilchengrößen von 10 bis 40 nm, Viskositäten von 5 bis 15 mPa.s bei 25° und Feststoffgehalten an Organopolysiloxan von 20 Gew.-%, jeweils bezogen auf das Gesamtgewicht der Suspension, erhalten. Die Suspensionen (A) bis (D) sind lagerbeständig, das heißt, es treten auch nach 12-monatiger Lagerung keine erkennbaren Abscheidungen auf, und hinterlassen beim Verdampfen des Wassers bei Raumtemperatur beim Druck der umgebenden Atmosphäre spröde bis harzartige, nicht redispergierbare, transparente Filme.

Tabelle 1

| | Organosiliciumverbindung (400 ml Gemisch) | Molverhältnis T-Einheit : D-Einheit* |
|---|---|---|
| (A) | 193 g Methyltrimethoxysilan<br>170 g Dimethyldimethoxysilan | 1 : 1 |
| (B) | 276,5g Methyltrimethoxysilan<br>105 g Dimethyldimethoxysilan | 7 : 3 |
| (C) | 193,5g Vinyltrimethoxysilan<br>157 g Dimethyldimethoxysilan | 1 : 1 |
| (D) | 276,5g Methyltrimethoxysilan<br>65 g Octamethylcyclotetrasiloxan | 7 : 3 |

* T-Einheit : Siloxaneinheit mit einem SiC-gebundenen organischen Rest,

D-Einheit : Siloxaneinheit mit zwei SiC-gebundenen organischen Resten

Beispiel 2

Die in Beispiel 1 beschriebene Arbeitsweise wird wiederholt mit der Abänderung, daß der Inhalt des Rohrreaktors auf 85 °C anstatt auf 65 °C gehalten wird, 400 ml je Stunde der Organosiliciumverbindung aus Tabelle 2 anstelle der Organosiliciumverbindung aus Tabelle 1 eingesetzt und 400 ml je Stunde eines Ethanol-Wasser-Gemisches anstelle eines Methanol-Wasser-Gemisches im Dünnschichtverdampfer abdestilliert werden. Im Destillat des Ethanol-Wasser-Gemisches befinden sich bei der Herstellung der Suspensionen (E) bis (G) höchstens 5 Gew.-% der eingesetzten Menge des Hexamethyldisiloxans.

Es werden milchige, wäßrige Suspensionen von Organopolysiloxanen (E) bis (G) erhalten mit elektronenmikroskopisch ermittelten Teilchengrößen von 70 bis 140 nm, Viskositäten von 5 bis 20 mPa.s bei 25 °C und Feststoffgehalten an Organopolysiloxan von 16 bis 19 Gew.-%, jeweils bezogen auf das Gesamtgewicht der Suspension. Die Suspensionen (E) bis (G) sind lagerbeständig, das heißt, es treten auch nach 12-monatiger Lagerung keine erkennbaren Abscheidungen auf. Die Organopolysiloxane der Suspensionen (F) und (G) lösen sich in unpolaren Lösungsmitteln. Die Suspensionen (F) und (G) hinterlassen beim Verdampfen des Wassers bei Raumtemperatur unter dem Druck der umgebenden Atmosphäre nicht redispergierbare, transparente Filme.

Tabelle 2

| | Organosiliciumverbindung (400 ml Gemisch) | Molverhältnis M-Einheit : Q-Einheit ** |
|---|---|---|
| (E) | 65,3 g Hexamethyldisiloxan<br>336 g Tetraethylsilikat | 1 : 2 |
| (F) | 98,5 g Hexamethyldisiloxan<br>253 g Tetraethylsilikat | 1 : 1 |
| (G) | 127 g Hexamethyldisiloxan<br>217 g Tetraethylsilikat | 3 : 2 |

** M-Einheit : Siloxaneinheit mit drei SiC-gebundenen organischen Resten

Q-Einheit : $SiO_{4/2}$-Einheit

Beispiel 3

In den in Beispiel 1 beschriebenen Rohrreaktor werden kontinuierlich 8 l je Stunde Wasser, das 50 g Eisessig auf 8 l Wasser enthält, eingespeist und auf 65 °C erwärmt. Über die fünf Einspeisungsstellen für die Organosiliciumverbindung werden kontinuierlich 600 ml eines Gemisches aus 342 g Methyltrimethoxysilan, 162 g Dimethyldimethoxysilan und 60 g N-(2-Aminoethyl)-3-aminopropyltrimethoxysilan zudosiert. Das

aus dem Rohrrekator austretende Reaktionsgemisch wird kontinuierlich auf einen Dünnschichtverdampfer aufgegeben. Im Dünnschichtverdampfer werden kontinuierlich 600 ml je Stunde eines Methanol-Wasser-Gemisches abdestilliert. Der wäßrigen Suspension wird nach der Destillation kontinuierlich 50 g Eisessig je Stunde zugesetzt, worauf die wäßrige Suspension in den Rohrreaktor rückgeführt wird. Nach 4 Durchgängen werden kontinuierlich 2 l je Stunde der kolloidalen wäßrigen Suspension abgenommen, 6 l je Stunde der kolloidalen wäßrigen Suspension in den Rohrreaktor rückgeführt und 2 l je Stunde frisches Wasser-Eisessig-Gemisch in den Rohrreaktor eingespeist. Das Gemisch aus Methyltrimethoxysilan, Dimethyldimethoxysilan und N-(2-Aminoethyl)-3-aminopropyltrimethoxysilan wird über die fünf Einspeisungsstellen wie oben beschrieben, mit einem konstanten Volumenstrom von 600 ml je Stunde zudosiert.

Es wird eine opaleszierende, wäßrige Suspension von Organopolysiloxan mit elektronenmikroskopisch ermittelten Teilchengrößen von 30 bis 60 nm, einer Viskosität von 22 mPa.s bei 25°C und einem Feststoffgehalt an Organopolysiloxan von 17 Gew.-%, bezogen auf das Gesamtgewicht der Suspension, erhalten.

Vergleichsversuch 1

a) In einem 3-l-Kolben mit Rührer, Tropftrichter und Destillationsbrücke werden 1,5 l Wasser und 9 g Dodecylbenzolsulfonsäure vorgelegt. Durch eine in die Vorlage eintauchende Kapillare werden bei 65°C und 400 mbar 590 ml eines Gemisches aus 290 g Methyltrimethoxysilan und 255 g Dimethyldimethoxysilan analog Beispiel 1 unter (A), innerhalb 5 h eingespritzt und es wird dabei das bei der Hydrolyse entstehende Methanol abdestilliert. Das Destillat des Methanol-Wasser-Gemisches enthält 50 Gew.-% der eingesetzten Menge des Dimethyldimethoxysilans.

b) Die Arbeitsweise von a) wird wiederholt mit der Abänderung, daß bei 85°C anstelle 65°C 709 ml eines Gemisches aus 174,5 g Hexamethyldisiloxan und 448 g Tetraethylsilikat analog Beispiel 2 unter (F) anstelle 590 ml eines Gemisches aus 290 g Methyltrimethoxysilan und 255 g Dimethyldimethoxysilan analog Beispiel 1 unter (A) zugegeben werden. Das Destillat des Ethanol-Wasser-Gemisches enthält 70 Gew.-% der eingesetzten Menge des Hexamethyldisiloxans.

Vergleichsversuch 2

In einem 3l-Kolben mit Rührer, Tropftrichter und Rückflußkühler wird ein Gemisch aus 1,5 l Wasser und 95 ml einer 10-Gew.-%-igen Lösung von Dodecyldiphenyletherdisulfonsäure im Gemisch mit seinem Natriumsalz, das einen pH-Wert von 2,5 aufweist, vorgelegt. Durch eine in die Vorlage eintauchende Kapillare werden bei 65°C und bei 1020 hPa (abs.) 650 g Methyltrimethoxysilan innerhalb 5 h eingespritzt.

Neben gelartigen Abscheidungen wird eine milchig trübe, wäßrige Suspension von Organopolysiloxan mit elektronenmikroskopisch ermittelten Teilchengrößen von 60 nm und einem Feststoffgehalt an Organopolysiloxan von 13 Gew.-%, bezogen auf das Gesamtgewicht der Suspension, erhalten. Beim Verdampfen des Wassers bei Raumtemperatur und beim Druck der umgebenden Atmosphäre bleibt von der Suspension ein Pulver zurück.

## Patentansprüche

**1.** Verfahren zur Herstellung kolloidaler Suspensionen von Organopolysiloxanen durch Vermischen von Organosiliciumverbindung aus der Gruppe der Gemische von Alkoxysilanen der Formel

$R_aSi(OR^1)_{4-a}$ ,

wobei a 0, 1, 2 oder 3 ist, mit der Maßgabe, daß die Gemische mindestens zwei verschiedene Silane mit voneinander verschiedenem Wert von a enthalten und a durchschnittlich 1,0 bis 2,0 ist, und worin R gleich oder verschieden sein kann, ein Wasserstoffatom oder einen einwertigen Kohlenwasserstoffrest mit 1 bis 8 Kohlenstoffatom(en) je Rest, der gegenüber Wasser inerte Substituenten aufweisen kann, bedeutet und $R^1$ gleich oder verschieden sein kann, einen Alkyl- oder Alkyloxyalkylenrest mit 1 bis 4 Kohlenstoffatom(en) je Rest oder einem Rest der Formel $-COCH_3$, $-COC_2H_5$ oder $-CH_2CH_2OH$ bedeutet,

und/oder deren Teilhydrolysaten

und gegebenenfalls von Alkoxygruppen freiem Organo(poly)siloxan mit höchstens 8 Siloxaneinheiten im Gemisch mit mindestens einem Alkoxysilan und/oder dessen Teilhydrolysat

mit Wasser in Gegenwart von Emulgator mit einer Geschwindigkeit von höchstens 5 Mol Organosiliciumverbindung je Stunde und Liter Wasser, dadurch gekennzeichnet, daß kontinuierlich voneinander getrennt Organosiliciumverbindung und Wasser einem Reaktor zugeführt werden, wobei mindestens einer der beiden Stoffe Emulgator enthält, und daß aus der aus dem Reaktor kontinuierlich austretenden wäßrigen Suspension kontinuierlich Alkanol abdestilliert wird.

**2.** Verfahren nach Anspruch 1, dadurch gekennzeichnet, daß die wäßrige Suspension, aus der Alkanol abdestilliert wurde, in den Reaktor rückgeführt wird.

**3.** Verfahren nach Anspruch 1 oder 2, dadurch gekennzeichnet, daß ein Rohrreaktor verwendet wird, bei dem das Wasser am Anfang des Rohrreaktors und die Organosiliciumverbindung über mehrere Einspeisungsstellen, die entlang der Längsachse des Rohrreaktors angeordnet sind, kontinuierlich zugegeben werden, und wobei mindestens einer der beiden Stoffe Emulgator enthält.

**4.** Verfahren nach Anspruch 1, 2 oder 3, dadurch gekennzeichnet, daß als Emulgator Additionssalz von Essigsäure an N-(2-Aminoethyl)-3-aminopropyltrimethoxysilan oder N-(2-Aminoethyl)-3-aminopropyltriethoxysilan eingesetzt wird.

## Claims

**1.** Process for the preparation of colloidal suspensions of organopolysiloxanes which involves mixing an organosilicon compound from the group comprising mixtures of alkoxysilanes of the formula

$$R_aSi(OR^1)_{4-a}$$

where a is 0, 1, 2 or 3, with the proviso that the mixtures contain at least two different silanes where the value of a is different in each, and a is on average 1.0 to 2.0, and in which R may be identical or different and denotes a hydrogen atom or a monovalent hydrocarbon radical having 1 to 8 carbon atoms per radical, which may contain substituents which are inert toward water, and $R^1$ may be identical or different and denotes an alkylalkylene or alkoxyalkylene radical having 1 to 4 carbon atoms per radical or a radical of the formula $-COCH_3$, $-COC_2H_5$ or $-CH_2CH_2OH$, and/or the partial hydrolysates thereof,
and an organo(poly)siloxane which is optionally free of alkoxy groups and contains a maximum of 8 siloxane units, mixed with at least one alkoxysilane and/or the partial hydrolysate thereof with water, in the presence of an emulsifier at a maximum rate of 5 moles of organosilicon compound per hour and per litre of water, characterised in that the organosilicon compound and water are fed continuously to a reactor separately from one another, at least one of the two substances containing an emulsifier, and in that alkanol is distilled off continuously from the aqueous suspension emerging continuously from the reactor.

**2.** Process according to Claim 1, characterised in that the aqueous suspension from which alkanol was removed by distillation is fed back into the reactor.

**3.** Process according to Claim 1 or 2, characterised in that a tubular reactor is used in which the water is added continuously at the beginning of the tubular reactor and the organosilicon compound is added continuously via several feed points arranged along the longitudinal axis of the tubular reactor, and where at least one of the two substances contains emulsifier.

**4.** Process according to Claim 1, 2 or 3, characterised in that the emulsifier employed is an addition salt of acetic acid with N-(2-aminoethyl)-3-aminopropyltrimethoxysilane or N-(2-aminoethyl)-3-aminopropyltriethoxysilane.

## Revendications

**1.** Procédé pour préparer des suspensions colloïdales de polyorganosiloxanes par mélangeage d'un composé organosilicique pris dans l'ensemble constitué par :

- les mélanges d'alcoxysilanes répondant à la formule :

$$R_aSi(OR^1)_{4-a}$$

dans laquelle :

a est égal à 0, à 1, à 2 ou à 3, avec la condition que les mélanges contiennent au moins deux silanes différant l'un de l'autre par la valeur de l'indice a, et que a soit en moyenne compris entre 1,0 et 2,0,

les R représentent chacun, indépendamment les uns des autres, un atome d'hydrogène ou un radical hydrocarboné univalent contenant de 1 à 8 atomes de carbone par radical, ce radical hydrocarboné pouvant porter des substituants inertes à l'égard de l'eau, et

les $R^1$ représentent chacun, indépendamment les uns des autres, un radical alkyle ou alcoxyalkylène contenant de 1 à 4 atomes de carbone par radical ou un radical de formule $-COCH_3$, $-COC_2H_5$ ou $-CH_2CH_2OH$,

et/ou de leurs hydrolysats partiels,

- et les (poly)organosiloxanes éventuellement dépourvus de radicaux alcoxy et contenant au plus 8 motifs siloxaniques, en mélange avec au moins un alcoxysilane et/ou son hydrolysat partiel,

avec de l'eau, en présence d'un émulsionnant, à une vitesse d'au plus 5 mol du composé organosilicique par heure et par litre d'eau, procédé caractérisé en ce qu'on introduit continuellement dans un réacteur le composé organosilicique et l'eau séparément l'un de l'autre, au moins un de ces deux corps contenant un émulsionnant, et en ce que, de la suspensions aqueuse sortant continuellement du réacteur, on chasse continuellement l'alcanol par distillation.

**2.** Procédé selon la revendication 1 caractérisé en ce que la suspension aqueuse de laquelle on a éliminé l'alcanol par distillation est renvoyée au réacteur.

**3.** Procédé selon l'une des revendications 1 et 2 caractérisé en ce qu'on utilise un réacteur tubulaire dans lequel on introduit continuellement l'eau au début du réacteur tubulaire et le composé organosilicique par plusieurs endroits d'alimentation disposés le long de l'axe longitudinal du réacteur tubulaire, au moins un des deux corps contenant un émulsionnant.

**4.** Procédé selon l'une quelconque des revendications 1, 2 et 3, caractérisé en ce qu'on utilise, comme émulsionnant, un sel d'addition de l'acide acétique sur le [N-(2-amino-éthyl)-3-amino-propyl]-triméthoxysilane ou le [N-(2-amino-éthyl)-3-amino-propyl]-triéthoxysilane.